# EUROPEAN PATENT APPLICATION

(11) **EP 4 749 085 A1**
(43) Date of publication of application: **27.05.2026**
(21) Application number: 25217797.7
(22) Date of filing: 21.11.2025
(51) Int. Cl.: F01D 5/18, F01D 5/28, F01D 9/04, F23R 3/00, F23R 3/06

(54) **CMC COMPONENT WITH DORMANT COOLING HOLES**

(30) Priority: 21.11.2024 US 202418954971
(71) Applicant: RTX Corporation, Farmington, CT 06032 (US)
(72) Inventor: CAMPBELL III, Christian X., West Hartford, 06119 (US); WILKINS, Peter T., Glastonbury, 06033 (US)
(74) Representative: Dehns

(57) **Abstract**

A method is described for introducing dormant cooling holes (120) into CMC components that have a base (200) made of a first group of plies (110) and a second group of plies (210). Before or after densification of a CMC preform, dormant cooling holes (120) are provided that pass through the first group of plies (110) but are covered by the second group of plies (210). The dormant cooling holes (120) become open upon erosion of the second plies (210). The opening of the dormant cooling holes (120) allows air to flow through the cooling holes (120) to the area of erosion to slow the erosion process.

## Description

### FIELD OF THE INVENTION

The present disclosure relates generally to methods for manufacturing ceramic matrix composites (CMCs). In particular, the present disclosure concerns manufacturing CMC components with cooling structures.

### BACKGROUND OF THE INVENTION

Gas turbine engines, in general, include a fan section, a compressor section, a combustion section, and a turbine section. Air enters through the fan section and is compressed in the compressor section before being introduced into the combustion section. In the combustion section, the air is mixed with fuel and ignited to generate a high-energy, high temperature gas flow. The high-energy, high temperature gas flow is expanded in the turbine section which is used to create thrust and to drive the compressor and fan sections.

Certain components of gas turbine engines are thus exposed to the high-energy, high temperature gas flow (flow path components). Therefore, it is desirable that such flow path components be made of heat resistant materials, for example, ceramic matrix composites (CMCs). CMC components can withstand much higher operating temperatures than components composed of superalloys. However, CMC components have comparably lower thermal conductivity. To increase their operational lifespans, precautions can be taken to cool CMC components by subjecting the components, or sections thereof, to a flow of cooling fluid (e.g., air).

Understandably, it is desirable to use cooling fluid in an efficient manner. For example, advantageously, those regions of a CMC component that have the highest susceptibility to damage/degradation due to high temperature exposure receive a greater flow of cooling fluid while those regions having a lower susceptibility to such damage/degradation receive a limited or no flow of cooling fluid. However, a region's need for cooling fluid flow can change during the operation of the CMC component. Thus, a region that initially has a low susceptibility to damage/degradation due to high temperatures exposure may, during the operational lifespan of the CMC component, develop into a region that that has a much greater need for the flow of cooling air.

There is thus a continuing need for alternative and/or improved manufacturing methods for providing cooling structures that allow for efficient use of cooling fluid in the cooling of CMC components exposed to high temperature gas flow, particularly to allow both efficient and flexible cooling of CMC components.

### SUMMARY OF THE INVENTION

In general, the present disclosure relates to methods for introducing dormant cooling holes into CMC components, and CMC components exhibiting such dormant cooling holes.

The present disclosure is directed, in a first aspect, to a ceramic matrix composite (CMC) component comprising:
a base having a bottom surface and a top surface, the base comprising a plurality of ceramic fiber plies comprising a first group of base plies and a second group of base plies, and
at least one dormant cooling hole within the base that extends from the top surface through the first group of base plies,
wherein the at least one dormant cooling hole is covered by the second group of base plies.

In yet another aspect, the present disclosure is directed to a method of forming a ceramic matrix composite comprising:
laying up a plurality of ceramic fiber plies to form a base having a bottom surface and a top surface, the base having a first group of base plies and a second group of base plies,
subjecting the ceramic matrix composite preform to densification to form a ceramic matrix composite, and
before or after densification, providing at least one dormant cooling hole within the base that extends from the top surface through the first group of base plies, and the at least one dormant cooling hole is covered by the second group of base plies.

In yet a further aspect, the present disclosure is directed to a turbine engine comprising:
a fan section, a compressor section, a combustion chamber, and a turbine section, the turbine section including at least one rotor and one or more turbine blade(s) extending radially outwardly from the at least one rotor;
a blade outer air seal assembly positioned between the one or more turbine blade(s) and an outer casing to the engine;
the blade outer air seal is formed of a plurality blade outer air seal segments, wherein each blade outer air seal segment comprises
a base having a bottom inner radial surface and a top outer radial surface, the base comprising a plurality of ceramic fiber plies comprising a first group of base plies and a second group of base plies, and
at least one dormant cooling hole within the base that extends from the top outer radial surface through the first group of base plies,
wherein the at least one dormant cooling hole is covered by the second group of base plies.

In further examples of the present disclosure, including further examples of the above, the CMC component further comprises at least one flange that extends from the top surface.

In further examples of the present disclosure, including further examples of the above, the CMC component further comprises two flanges formed by bringing together a first L-shaped plurality of plies, a U-shaped plurality of plies, and a second L-shaped plurality of plies.

In further examples of the present disclosure, including further examples of the above, the at least one flange extends perpendicularly from the top surface.

In further examples of the present disclosure, including further examples of the above, the at least one dormant cooling hole extends in a direction normal to the top surface.

In further examples of the present disclosure, including further examples of the above, the at least one dormant cooling hole is arranged at an angle with respect to the normal of the top surface.

In further examples of the present disclosure, including further examples of the above, the at least one dormant cooling hole is arranged at an angle of 0° - 75° with respect to the normal of the top surface.

In further examples of the present disclosure, including further examples of the above, the CMC component further comprises an environmental barrier coating system, having one or more layers, applied to the bottom surface.

In further examples of the present disclosure, including further examples of the above, the component is a vane airfoil or platform therefor.

In further examples of the present disclosure, including further examples of the above, the component is a blade airfoil or platform therefor.

In further examples of the present disclosure, including further examples of the above, the component is a combustor liner.

In further examples of the present disclosure, including further examples of the above, the component is a blade outer air seal (BOAS) segment.

In further examples of the present disclosure, including further examples of the above, a plurality of BOAS segments are arranged to form an annular shaped structure.

In further examples of the present disclosure, including further examples of the above, the method further comprises, during the laying up of the plurality of ceramic fiber plies, forming at least two flanges by bringing together a first L-shaped plurality of plies, a U-shaped plurality of plies, and a second L-shaped plurality of plies.

In further examples of the present disclosure, including further examples of the above, the at least one cooling hole is produced by a mechanical drilling, ultrasonic machining, dry laser drilling, and/or water-guided laser drilling.

In further examples of the present disclosure, including further examples of the above, the at least one at least one dormant cooling hole is formed before densification.

In further examples of the present disclosure, including further examples of the above, the densification involves melt infiltration and the at least one at least one dormant cooling hole is filled with a fugitive material during melt infiltration.

In further examples of the present disclosure, including further examples of the above, the at least one at least one dormant cooling hole is formed after densification.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
Fig. 1 schematically illustrates a partial cross section of an exemplary gas turbine engine.
Fig. 2 is a schematic illustration of a cross section of CMC intermediate preform of a partial component base.
Fig. 3 is a schematic illustration of a cross section of CMC preform of a component base having dormant cooling holes covered by CMC preform plies.
Fig. 4 is schematic illustration of a cross section of a component base with an environmental barrier coating in which a dormant cooling hole has been opened due to degradation.
Fig. 5 is schematic illustration of a cross section of a CMC intermediate preform of a partial blade outer air seal (BOAS) segment made from sublaminates.
Fig. 6 is schematic illustration of a cross section of a completed CMC preform of a blade outer air seal (BOAS) segment having dormant cooling holes covered by CMC preform plies.
Fig. 7 shows the embodiment of Fig. 6 in which the cooling holes are filled with a fugitive material prior to melt infiltration.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of the embodiments of the inventive concepts, numerous specific details are set forth in order to provide a more thorough understanding of the inventive concepts. It will be apparent to one skilled in the art, however, having the benefit of the instant disclosure that the inventive concepts disclosed herein may be practiced without these specific details.

While the discussion below often makes reference to BOAS and BOAS segments, it should be recognized that the present disclosure is not limited to BOAS but includes other CMC components used within jet engines that may be exposed to high temperature gas flows, for example, vane airfoils and platforms therefor, blade airfoils and platforms therefor, combustor liners, and seals.

In the discussion below, axial refers to a direction that coincides with the longitudinal axis of the engine. Radial refers to a direction that is radial with respect to the longitudinal axis of the engine. Circumferential refers to a direction that corresponds to the circumference of a circle around the longitudinal axis of the engine. The leading edge/portion of a structure is the edge/portion that faces into the flow of the hot gases, i.e., faces upstream. The trailing edge/portion of a structure is the edge/portion that the faces away from the flow of the hot gases, i.e., faces downstream.

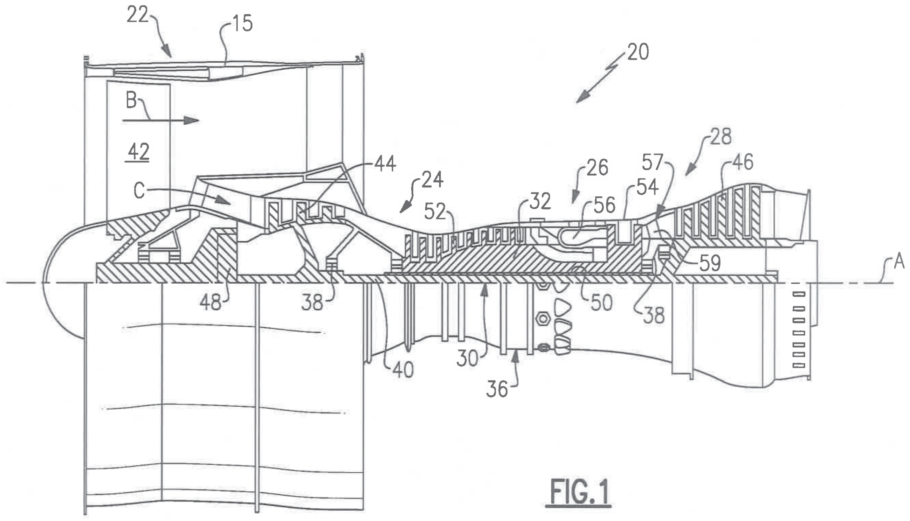

Fig. 1 schematically illustrates an example of a gas turbine engine 20 (i.e., a two-spool turbofan) which includes a fan section 22, a compressor section 24, a combustor section 26, and a turbine section 28. Fan section 22 drives air along a bypass flow path B in a bypass duct defined within a housing 15, and also along a core flow path C for compression in compressor section 24, with subsequent introduction into combustor section 26, followed by expansion through turbine section 28. Although Fig. 1 depicts a two-spool turbofan gas turbine engine, it should be understood that the concepts described herein are not limited to use with two-spool turbofans engines and may be applied to other types of turbine engines.

Engine 20 generally includes a low speed spool 30 and a high speed spool 32 mounted for rotation about an engine central longitudinal axis A, relative to an engine static structure 36, via several bearing systems 38. Various bearing systems 38 at various locations may alternatively or additionally be provided. The location of bearing systems 38 may be varied as appropriate to the application.

The low speed spool 30 generally includes an inner shaft 40 that interconnects, a first (or low) pressure compressor 44 and a first (or low) pressure turbine 46. Inner shaft 40 is connected to fan 42 through a speed change mechanism, which in this exemplary embodiment is illustrated as a geared structure 48 to drive fan 42 at a lower speed than the low speed spool 30. High speed spool 32 includes an outer shaft 50 that interconnects a second (or high) pressure compressor 52 and a second (or high) pressure turbine 54. Combustor 56 is positioned between high pressure compressor 52 and high-pressure turbine 54. A mid-turbine frame 57 of the engine static structure 36 may be arranged generally between the high-pressure turbine 54 and the low-pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core air flow is first compressed by low pressure compressor 44, and then by the high-pressure compressor 52. Thereafter, the core air flow is mixed and burned with fuel in combustor 56, then expanded in high pressure turbine 54 and low-pressure turbine 46. The mid-turbine frame 57 includes airfoils 59 which are in the core airflow path C. The turbines 46 and 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low-pressure compressor, or aft of the combustor section 26 or even aft of turbine section 28, and fan 42 may be positioned forward or aft of the location of gear system 48.

The turbine section 28 includes at least one rotor and at least one blade extending radially outwardly from the rotor. The turbine section 28 may further include a blade outer air seal(s) (BOAS(s)). The blade outer air seal can be an assembly of a plurality of BOAS segments that together form an annular shaped shroud around the engine central longitudinal axis A which is positioned between an outer casing of the engine and the turbine blade(s) of the turbine section.

As noted above, jet engine components such as BOAS, BOAS segments, vane airfoils and platforms therefor, blade airfoils and platforms therefor, combustor liners, and seals, can be made from CMC materials. In general, these CMC components are prepared by first creating a CMC preform which serves as the initial framework for creating the CMC component. The preform contains a stack of fabric sheets or plies in which the stack is formed via a layup process. The plies are made from ceramic fibers, or bundles of ceramic fibers called tows, held together with a binder. The fiber tows can be in the form of unidirectional tows or can be woven fibers. For example, the fibers can be woven into a two-dimensional fabric sheet or ply and then the plies are stacked during the layup process to form the preform. Alternatively, the preform can be in the form of a three-dimensional weave wherein, for example, a plurality of warp fibers are interwoven through a plurality of weft fiber layers. Binders can be used to help hold the fibers/plies together to provide a certain rigidity to the preform, for example, polymeric binders such as polyvinyl alcohol (PVA) or polyvinyl butyral (PVB).

The fibers/filaments used in the CMC preforms may be, for example, silicon carbide (SiC), carbon, mullite, zirconium carbide (ZrC), hafnium carbide (HfC), silicon nitride, aluminum oxide, or combinations thereof. The ceramic fibers may also be oxycarbide-, oxynitride-, carbonitride-, silicate-, boride-, phosphide-, or oxide-based fibers. In still further examples, the fibers are fully crystalline, partially crystalline, or predominantly amorphous or glassy. In one particular example, the fibers are SiC fibers.

The fibers of the preform can, optionally, be provided with one or several interphases deposited prior to introduction of a matrix material into the preform. This interphase coating can be, for example, a coating of boron nitride, silicon-doped boron nitride, boron-doped carbon, boron carbide, titanium nitride, or zirconium nitride which is applied by chemical vapor infiltration (CVI). The interphase coating(s) is used to ensure that the composite will fail in a non-brittle manner by preventing crack formation and/or propagation.

After the CMC preform is formed by the layup, the preform is subjected to densification to add matrix material to fill the remaining void spaces within the preform. This procedure stiffens and strengthens the fiber layers or woven plies of ceramic fiber tows to form the CMC. Thus, densification involves reducing the porosity within the preform, making it more solid and robust, by filing the remaining pores within the preform. The goal is to achieve a higher relative density, and ensure that the final CMC structure is compact and free of large voids. In one particular example, the CMC material contains SiC fibers within a SiC matrix, also referred to as a SiC/SiC composite.

Various methods can be used to add matrix material during densification. These include, but are not limited to, chemical vapor infiltration (CVI), reactive melt infiltration (RMI) (such as liquid silicon infiltration (LSI)), and polymer infiltration and pyrolysis (PIP).

Chemical vapor infiltration (CVI) involves introducing gaseous precursors into the porous CMC preform. These precursors react at the surface of the fibers, depositing additional material and filling the voids. Chemical liquid-vapor deposition (CLVD) uses liquid precursors that vaporize and infiltrate the preform. The liquid-to-vapor conversion occurs at the fiber surface, leading to densification.

Liquid silicon infiltration (LSI) utilizes liquid (molten) silicon to infiltrate the CMC preform. Silicon reacts with carbon or other constituents of the CMC preform, forming a dense matrix.

In polymer infiltration and pyrolysis (PIP), a polymer precursor is infiltrated into the preform. The subsequent pyrolysis process converts the polymer into a ceramic matrix. During pyrolysis the matrix shrinks leading to microcracks, which require repeating the polymer and infiltration cycle multiple times.

Prior to densification, steps can be taken to retain the shape of structural features and/or to form structural features that will be retained following densification. For example, prior to densification, appropriately shaped tools can mold the preform during layup to and hold the preform in a desired shape during densification. After densification, the tooling can be removed and the densified preform can be subjected to further processing as needed.

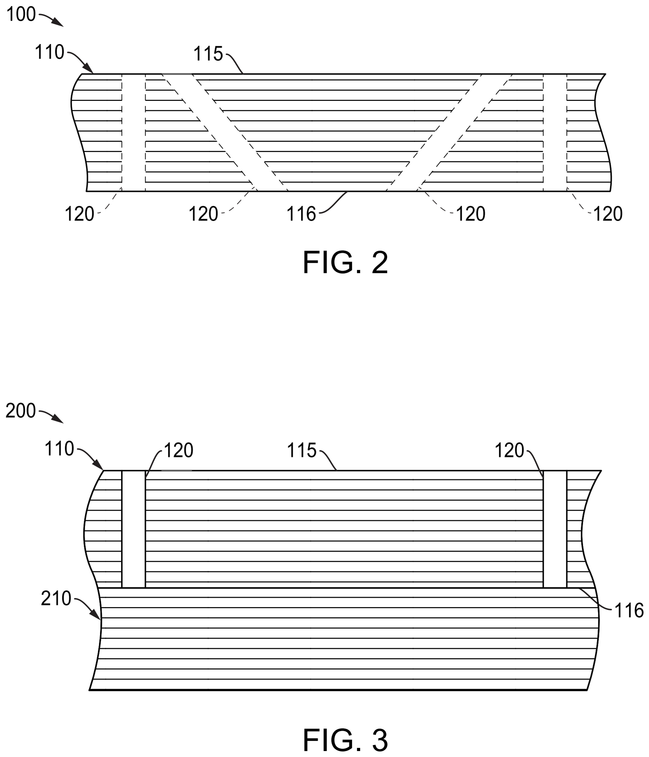

Fig. 2 illustrates a general embodiment in accordance with the disclosure. Fig. 2 shows a partial cross section of a CMC preform 100 at an intermediate stage of production in which in the base of the CMC preform is not yet completed. In particular, Fig. 2 shows a partial base of a CMC preform, referred to herein as a sublaminate, made from a first group of base plies 110. The first group of base plies 110 has a top surface 115 and a bottom surface 116. Bottom surface 116 faces the direction towards the flow path of hot gases when the CMC component is positioned in the jet engine. On the other hand, top surface 115 faces the direction of a source of cooling air (for example, the outer radial surface of a BOAS segment or combustor liner or an internal cooling cavity of a vane airfoil or blade airfoil).

As can be seen in Fig. 2, one or more cooling holes 120 can be provided in the first group of base plies 110. These cooling holes 120, as shown, extend from the top surface 115 of the base through the first group of base plies 110 to the bottom surface 116 of the first group of base plies 110. The cooling holes can be arranged in a direction that is normal to the top surface 115 of the base, i.e., they can have a longitudinal axis that is perpendicular to the top surface 115 of the base. Alternatively, as shown in Fig. 2, the cooling holes can be arranged at an angle with respect to the normal to the top surface 115 of the base, for example, at an angle of 0 to 75°, such as 0-10° or 0-30° or 0-45° or 0-75° or 30° - 75° or 45° - 60° or 50° - 70°. As discussed further below, these cooling holes 120 can be provided in the CMC preform at this intermediate production point or can be formed at a latter point in the production process. For this reason, the cooling holes 120 are shown with dotted lines in Fig. 2

Fig. 3 illustrates the base of a completed CMC preform in accordance with an embodiment of the present disclosure. As shown in Fig. 3, the base 200 is made up of the first group of base plies 110 (shown in Fig. 2), or top sublaminate of plies, and a second group of base plies 210, i.e., a bottom sublaminate of plies. The first group of base plies 110 can also be characterized as a "cold" side sublaminate as this group of plies forms the part of the base that is away from the flow of hot gases. Conversely, the second group of base plies 210 can be characterized as a "hot" side sublaminate as this group of plies forms the part of the base that is closer to or exposed to the flow of hot gases. The embodiment of Fig. 3 also shows the one or more cooling holes 120 extending from the top surface 115 of the base through the first group of base plies 110 to the to the bottom surface 116 of the first group of base plies 110. However, the one or more cooling holes 120 do not extend into the second group of base plies 210. Thus, these cooling holes 120 are closed by the second group of base plies 210 and, for this reason, are referred to as "dormant" cooling holes.

To prepare the base of Fig. 3 an undensified or partially densified top sublaminate can be combined with an undensified or partially densified bottom sublaminate, and then the completed preform can be subject to final densification. Alternatively, the bottom sublaminate can be formed by laying plies onto the bottom surface of the top sublaminate (whether in undensified form or partially densified form), or *vice versa,* and then the completed preform can be subjected to final densification.

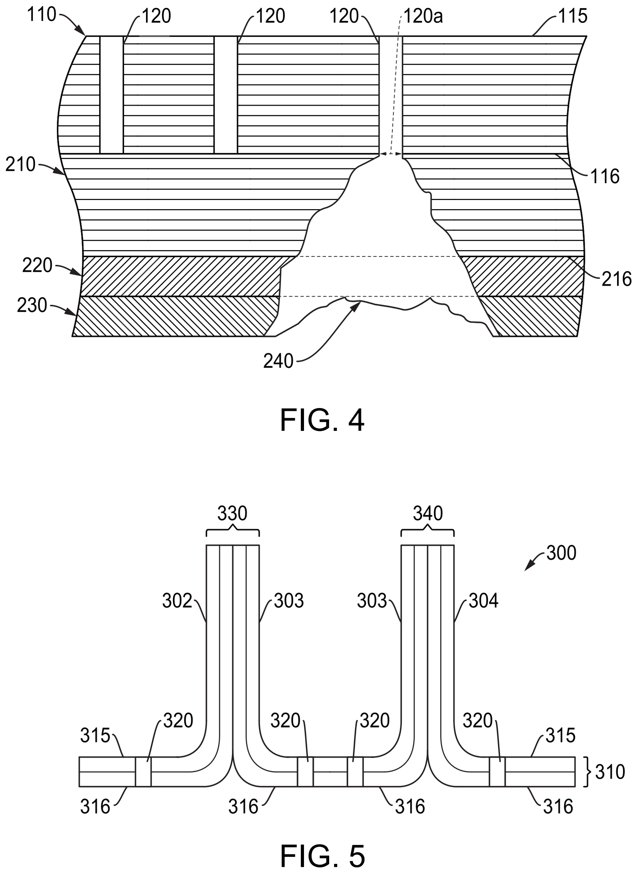

Fig. 4 shows the base the embodiment of Fig. 3 in which the bottom surface 216 of the second group of base plies 210 is coated with an environmental barrier coating (EBC) system. **In** this embodiment, the EBC system includes a bond layer 220 and an environmental barrier coating layer 230. Additionally, Fig. 4 shows a degradation 240 that extends through the EBC layer 230, the bond coat 220, and the second group of base plies 210. The degradation 240 has resulted in the erosion of material and the opening of a dormant cooling hole 120 as shown at 120a.

Such degradation can be initiated by corrosive high temperature water vapor. For example, high-temperature water vapor within the hot gas flow can cause a recession reaction with Si containing materials such as SiC (used in the fibers and/or the ceramic matrix of the CMC component). In the reaction, heated H₂O reacts with Si to form gaseous silicon hydroxide (Si(OH)₄)). The recession reaction leads to gradual deterioration and loss of the CMC material. Eventually, recession of the CMC material opens any dormant cooling holes in the area that is receding. Additionally, since the recession reaction between the hot water vapor and Si is a clean reaction, the reaction does not produce solid reaction-by-products that could result in the cooling holes becoming plugged or sealed again.

Damage to the CMC component resulting in the opening of dormant cooling holes can be caused by other factors. For example, CMAS (Calcium-Magnesium-Aluminum-Silicate) infiltration, spallation/delamination, or foreign object damage (FOD) might result in sufficient erosion/damage of the second group of base plies 210 to cause a dormant cooling hole 120 to become open as shown at 120a.

As a result of the recession/erosion uncovering a dormant cooling hole, cooling air flowing over the top surface 115 of the base can now flow through the opened cooling hole, allowing cooling air to reach the degradation 240. The cooling air cools the area of the degradation and thereby slows the degradation process aids in prolonging the operational life of the CMC component. Conversely, other dormant cooling holes remain closed by plies of the second group of base plies 210 and are not involved in the utilization of the cooling air. This system of providing dormant cooling holes thus results in both an effective and efficient use of the cooling air, directing the cooling air to regions (like degradation 240) when such regions need additional cooling, while at the same time avoiding unnecessary expenditure of cooling air to areas that do not require cooling air flow.

Some CMC components such as BOAS segments or combustor liners exhibit flanges. These flanges are load bearing features and provide structures for attaching the completed CMC component to another structure, for example, the outer casing of an engine. Fig 5 shows an embodiment of a top or cold side sublaminate of a CMC preform, e.g., a preform of a BOAS segment, in which the preform exhibits such load bearing flanges.

As shown in Fig. 5, a cold side sublaminate 300 is formed from several other sublaminates. In particular, the cold side sublaminate 300 is formed by bringing together a first L-shaped plurality of plies 302 (a first sublaminate), a U-shaped plurality of plies 303 (a second sublaminate), and a second L-shaped plurality of plies 304 (a third sublaminate). The horizontal portions of the L-shaped structures and U-shaped structure form the first group of base plies 310. The upright portion of the first L-shaped structure 302 and one of the upright sections of the U-shaped structure 303 come together to form a first flange 330. Similarly, the upright portion of the second L-shaped structure 304 and the other of the upright sections of the U-shaped structure 303 come together to form the other of the two flanges, i.e., flange 340. It should be noted that if it is intended for the CMC component to have only one flange, this could be formed by bringing two L-shaped laminates together.

As an alternative, the first group of base plies 310 and the two flanges 330 and 340 can be formed by two Y-weaves of a plurality of ceramic fiber plies. Each Y-weave of plurality of ceramic fiber plies form one of the flange sections 330/340 and two bifurcated arms which become the first group of base plies 310.

As can be seen in Fig. 5, one or more cooling holes 320 can be provided in the first group of base plies 310. These cooling holes 320, as shown, extend from the top surface 315 of the base through the first group of base plies 310 to the bottom surface 316 of the first group of base plies 310. The cooling holes 320 can be arranged in a direction that is normal to the top surface 315 of the base, i.e., they can have a longitudinal axis that is perpendicular to the top surface 315 of the base, or the cooling holes 320 can be arranged at an angle with respect to normal to the top surface 315 of the base, as described above with respect to Fig. 2.

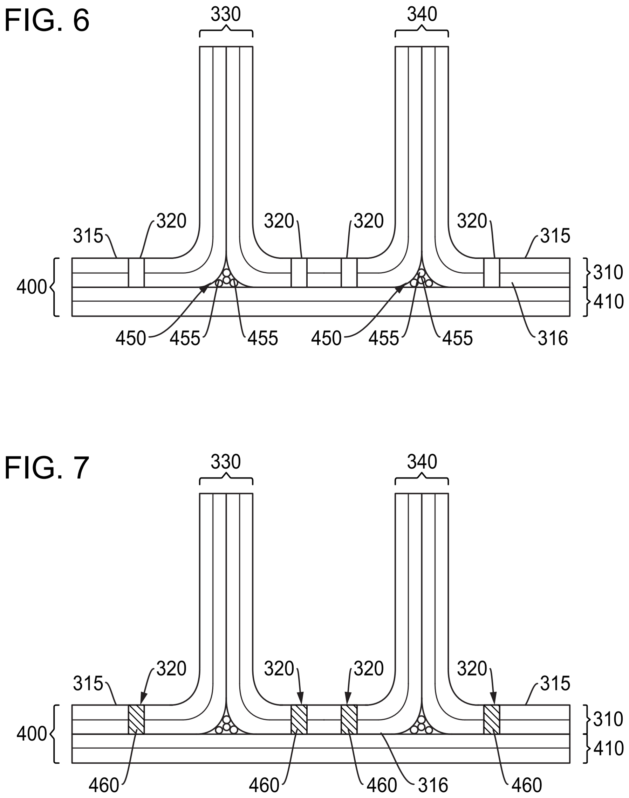

Fig. 6 illustrates the base of a completed CMC preform of the intermediate preform of Fig. 5. As shown in Fig. 6, the base 400 is made up of the first group of base plies 310 and a second group of base plies 410. As in the embodiment of Fig. 3, the first group of base plies 310 in Fig. 6 can be characterized as a "cold" side sublaminate, and the second group of base plies 410 can be characterized as a "hot" side sublaminate. The embodiment of Fig. 6 also shows the one or more cooling holes 320 extending from the top surface 315 of the base through the first group of base plies 310 to the to the bottom surface 316 of the first group of base plies 310. However, the one or more cooling holes 320 do not extend into the second group of base plies 410. Thus, these cooling holes 320 are closed by the second group of base plies 410 and thus are dormant cooling holes.

As shown in Fig. 6, bringing together the first group of base plies 310 and the second group of base plies 410 forms of cavity 450 having a triangular shaped cross section below each of the flanges. In Fig. 6, to provide additional strength for the flange, cavity 450 is filled with ceramic material such as ceramic fibers 455 ("noodles") or other ceramic filler material. Cavity 450 is conventionally referred to as the noodle region.

The dormant cooling holes can be formed at various times during the production process of the CMC component. For example, referring to Fig. 6, the completed CMC preform can be formed from 4 sublaminates each of which is in a preformed state, i.e., a compacted green state prior to any densification. For example, a first L-shaped sublaminate, a second U-shaped sublaminate, and a third L-shaped are to be used to form an intermediate preform as shown in Fig. 5. Prior to any densification, and prior to bringing the sublaminates together, cooling hole(s) are formed in one of more of these three sublaminates. The three sublaminates are then brought together to form the flanges and part of the base of the CMC preform. The cooling holes are then sealed by the addition a fourth sublaminate (formed from the second group of base plies 210) that completes the base of the CMC preform as shown in Fig. 6. As an alternative, the cooling holes can be formed after the three sublaminates are brought together to form the flanges and part of the base of the CMC preform, or even after the fourth sublaminate is added to complete the CMC preform.

When the cooling holes are formed prior to any pre-densification or densification, the binder system used in the preform should be sufficiently robust to permit formation of the cooling holes by drilling without the preform sublaminates losing the shape.

As an alternative, the sublaminates can be initially held in the desired positions by tooling, and then subjected to a pre-densification step to provide further rigidity to the structure forming the intermediate or completed preform. Following the pre-densification, the one or more cooling holes can be formed in the first group of base plies.

Alternatively, the dormant cooling holes can be formed in the completed preform (see, Figs. 3 and 6), i.e., after densification. For example, the completed preform can be subjected to a densification step to form the CMC component, and then the one or more cooling holes 120/320 can be formed in the first group of base plies 110/310.

The shape of the dormant cooling holes is not limited and can vary. By way of example, the dormant cooling holes can be in the form of cylindrical passages or slot-shaped passages. In one embodiment, the dormant cooling holes are cylindrical in form. The size of the dormant cooling holes can also vary. For example, the dormant cooling holes can have a diameter of 0.005 to 0.05 inches (0.127 to 1.27 mm) such as 0.010 - 0.030 inches (0.254 - 0.762 mm) or 0.015 - 0.025 inches (0.381 - 0.635 mm).

The arrangement of the dormant cooling holes can also vary. For example, dormant cooling holes can be positioned in alternating spacing on either side of a flange and also optionally angled so as to extend under a flange. Due to the thickness of CMC components beneath flanges it can be desirable to facilitate cooling in these areas.

Also, it should be noted that the dormant cooling holes can be used in conjunction with an array active cooling holes. Thus, in addition to the dormant cooling holes, the CMC component can be provided an arrangement of active cooling holes that allow cooling air to flow from a region above the outer radial surface into the interior of the CMC component. In such an embodiment, it can be desirable to place dormant cooling holes in regions that are not cooled by exiting active cooling holes.

The cooling holes can be produced by a variety of techniques, for example, mechanical drilling, ultrasonic machining (also known as ultrasonic impact grinding), dry laser drilling and/or water-guided laser drilling. Factors that can impact the choice of drilling technique include whether drilling is before or after densification, the type of binder used in making the CMC preform, and the desired precision for forming the holes. For example, in one embodiment the cooling holes are drilled after densification by ultrasonic machining. In another embodiment, the cooling holes are drilled in the preform (before densification) wherein the drilling is performed by water-guided laser drilling.

The timing of when during the CMC production process the dormant cooling holes are formed can also be impacted by the procedures used during densification. For example, if the densification procedures involve the use of chemical vapor infiltration (CVI), the presence of the dormant cooling holes can facilitate penetration of the gaseous reactants into the interior of the CMC and, as a result, improve the densification process.

Conversely, if reactive melt infiltration is used during densification, the molten reactant, e.g., molten Si, can fill the dormant cooling holes thus rendering them unusable. To avoid the potential molten reactant plugging, the dormant cooling holes can be formed after densification is complete. Alternatively, the dormant cooling holes can be formed prior to melt infiltration and filled with a fugitive material. The fugitive material would prevent the cooling holes from being filled during the melt infiltration, and then, after completion of the melt infiltration step, the fugitive material can be removed by appropriate means, e.g., solvent dissolution or heat treatment.

Fig. 7 shows the embodiment of Fig. 6 in which the cooling holes 320 are filled with a fugitive material 460 prior to melt infiltration. The fugitive material is selected so that it will withstand the temperatures of the melt infiltration and will not interact with the molten alloy/metalloid used during melt infiltration.

For example, graphite can be used in certain situations as a fugitive material that can be removed by heat treatment. However, if molten silicon is used during melt infiltration, one might avoid using graphite to fill the cooling holes as the carbon can react with silicon to form silicon carbide which can then be difficult to remove from the cooling holes. Similarly, in some applications refractory metals can be used as a fugitive material that can be removed by exposure to an oxidizing material. But, as in the case with graphite, refractory metals can react with silicon to form silicides which could then plug the cooling holes. Crystalline boron nitride, either hexagonal or cubic, can be converted into B₂O₃ to form a suitable fugitive material for filling the cooling holes. For example, BN powder can be introduced into the cooling hole and then compacted. The compacted BN powder is then subjected to a heat treatment. After melt infiltration, the oxidized BN (B₂O₃ glass) can be removed by melting or by reacting with water vapor. High melting temperature glass compositions containing B₂O₃ maybe also be suitable fugitive materials for this application.

The present disclosure provides an efficient method for forming cooling cavities beneath radial flanges. These cooling cavities provide a means for effectively cooling the interior of CMC components exhibiting flanges and thereby reduce the formation of thermal gradients at regions of high thickness and in turn reduce through-thickness and in-plane thermal stresses.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A ceramic matrix composite (CMC) component comprising:
a base (200; 400) having a bottom surface (216) and a top surface (115; 315), the base (200; 400) comprising a plurality of ceramic fiber plies (110, 210; 310, 410) comprising a first group of base plies (110; 310) and a second group of base plies (210; 410), and
at least one dormant cooling hole (120; 320) within the base (200) wherein the at least one dormant cooling hole (120; 320) extends from the top surface (115; 315) through the first group of base plies (110; 310),
wherein the at least one dormant cooling hole (120; 320) is covered by the second group of base plies (210; 410).

2. The CMC component according to claim 1, wherein the CMC component further comprises at least one flange (330, 340) that extends from the top surface (315).

3. The CMC component according to claim 2, wherein the CMC component further comprises two flanges (330, 340) formed by bringing together a first L-shaped plurality of plies (302), a U-shaped plurality of plies (303), and a second L-shaped plurality of plies (304).

4. The CMC component according to claim 2 or 3, wherein the at least one flange (330, 340) extends perpendicularly from the top surface (315).

5. The CMC component according to any preceding claim, wherein at least one dormant cooling hole (120; 320) extends in a direction normal to the top surface (115; 315).

6. The CMC component according to any of claims 1 to 4, wherein at least one dormant cooling hole (120; 320) is arranged at an angle with respect to the normal of the top surface (115; 315), optionally wherein the angle is 0° - 75°.

7. The CMC component according to any preceding claim, further comprising an environmental barrier coating system, comprising one or more layers (220, 230), applied to the bottom surface (216).

8. The CMC component according to any preceding claim, wherein the component is:
a vane airfoil or platform therefor;
a blade airfoil or platform therefor; or
a combustor liner.

9. The CMC component according to any of claims 1 to 7, wherein the component is a blade outer air seal (BOAS) segment.

10. A BOAS assembly comprising a plurality of BOAS segments according claim 9, wherein the BOAS segments are arranged to form an annular shaped structure.

11. A method of forming a ceramic matrix composite comprising:
laying up a plurality of ceramic fiber plies (110, 210; 310, 410) to form a base (200; 400) having a bottom surface (216) and a top surface (115; 315), the base (200; 400) having a first group of base plies (110; 310) and a second group of base plies (210; 410),
subjecting the ceramic matrix composite preform (100) to densification to form a ceramic matrix composite, and
before or after densification, providing at least one dormant cooling hole (120; 320) within the base (200; 400) wherein the at least one dormant cooling hole (120; 320) extends from the top surface (115; 315) through the first group of base plies (110; 310), and the at least one dormant cooling hole (120; 320) is covered by the second group of base plies (210; 410).

12. The method according to claim 11, further comprising, during the laying up of the plurality of ceramic fiber plies (110, 210; 310, 410), forming at least two flanges (330, 340) by bringing together a first L-shaped plurality of plies (302), a U-shaped plurality of plies (303), and a second L-shaped plurality of plies (304).

13. The method according to claim 11 or 12, wherein the at least one cooling hole (120; 320) is produced by a mechanical drilling, ultrasonic machining, dry laser drilling, and/or water-guided laser drilling.

14. The method according to any of claims 11 to 13, wherein:
the at least one dormant cooling hole (120; 320) is formed before densification, optionally wherein the densification involves melt infiltration and the at least one dormant cooling hole (120; 320) is filled with a fugitive material (460) during melt infiltration; or
the at least one dormant cooling hole (120; 320) is formed after densification.

15. A turbine engine (20) comprising:
a fan section (22), a compressor section (24), a combustion chamber (56), and a turbine section (28), the turbine section (28) including at least one rotor and one or more turbine blade(s) extending radially outwardly from the at least one rotor;
a blade outer air seal assembly positioned between the one or more turbine blade(s) and an outer casing to the engine;
the blade outer air seal is formed of a plurality blade outer air seal segments, wherein each blade outer air seal segment comprises
a base (200; 400) having a bottom inner radial surface (216) and a top outer radial surface (115; 315), the base (200; 400) comprising a plurality of ceramic fiber plies (110, 210; 310, 410) comprising a first group of base plies (11 0; 310) and a second group of base plies (210; 410), and
at least one dormant cooling hole (120; 320) within the base (200) wherein the at least one dormant cooling hole (120; 320) extends from the top outer radial surface (216) through the first group of base plies (110; 310),
wherein the at least one dormant cooling hole (120; 320) is covered by the second group of base plies (210; 410).
